# EUROPÄISCHE PATENTANMELDUNG

(11) **EP 2 535 376 A1**
(43) Veröffentlichungstag der Anmeldung: **19.12.2012**
(21) Anmeldenummer: 11004830.3
(22) Anmeldetag: 14.06.2011
(51) Int. Cl.: C08L 71/00

(54) **Mehrkomponentige Zusammensetzung als Klebstoff für schwierig zu verklebende Materialien**

(71) Anmelder: Merz+Benteli AG, 3172 Niederwangen (CH)
(72) Erfinder: Huber, Stefan, 4900 Langenthal (CH); Burckhardt, Fritz, 3414 Oberburg (CH); Lerf, Claude, 3280 Meyriez (CH)
(74) Vertreter: Schaad, Balass, Menzl & Partner AG

(57) **Zusammenfassung**

Die vorliegende Erfindung betrifft eine zwei- oder mehrkomponentige Zusammensetzung umfassend a) eine erste Komponente A enthaltend mindestens ein Silan-modifiziertes Präpolymer und b) eine zweite Komponente B enthaltend Wasser. Die Zusammensetzung ist dadurch charakterisiert, dass sie zusätzlich ein zyklisches Carbonat umfasst. Besagtes Präpolymer ist dabei bevorzugt ein Dimethoxysilan-, ein Trimethoxysilan- oder ein Triethoxysilan-terminiertes Präpolymer und umfasst ein Polysulfid und/oder ein organisches Polymer ausgewählt aus der Gruppe bestehend aus einem Polyether, Polyacrylat, Polyisobuten, Polyurethan, Polyacrylnitril-Butadien, Polycarbonat, Polyester, Polystyrol, Polyolefin und Mischungen davon. Zudem wird die Verwendung der Zusammensetzung als Kleb-, Dicht- oder Beschichtungsstoff offenbart, insbesondere als Klebstoff für Substrate aus schwierig zu verklebenden Materialien wie Acrylnitril-Butadien-Styrol (ABS).

## Beschreibung

Die vorliegende Erfindung betrifft eine zwei- oder mehrkomponentige Zusammensetzung gemäss Anspruch 1. Die Erfindung betrifft weiter die Verwendung besagter Zusammensetzung als Kleb-, Dicht- oder Beschichtungsstoff, insbesondere für Substrate umfassend Acrylnitril-Butadien-Styrol (ABS), sowie ein Verfahren zum Verkleben von Gegenständen.

In vielen Industriezweigen wie etwa der Automobilindustrie sind Klebstoffe von besonderem Interesse, welche schwierig zu verklebende Materialen effektiv und zuverlässig miteinander verbinden können. Einige Materialien, welche schwierig zu verkleben sind, besitzen eine niedrige Oberflächenenergie. Besagte Materialien umfassen etwa Acrylnitril-Butadien-Styrol (ABS), Acrylnitril-Styrol-Acrylat (ASA), Polyethylen, Polypropylen, Aluminium, Stahl oder Faser-verstärkte Kunststoffe.

Insbesondere ABS-Kunststoffe stellen aufgrund ihrer überragenden Eigenschaften wie hohe Festigkeit, Schlagfestigkeit und Oberflächenhärte begehrte Werkstoffe dar und werden insbesondere bei der Herstellung von Möbeln, Einzelteilen in der Automobilindustrie, Unterhaltungselektronik, Schalttafeln und Ähnlichem eingesetzt. Weitere positive Eigenschaften von ABS-Kunststoffen sind die hohe Steifigkeit sowie eine gute Kratzfestigkeit und Härte. Zudem sind ABS-Kunststoffe leicht zu verarbeiten und können dauerhaft einer Gebrauchstemperatur von ca. 80°C bis 90°C ausgesetzt werden, ohne dass deren Eigenschaften massgeblich beeinträchtig würden.

Allerdings erlauben es nur wenige Klebstoffe, ABS-Kunststoffe effektiv mit anderen Materialien zu verkleben. Ebenso problematisch ist es, zwei Substrate aus ABS miteinander zu verkleben. Oft kommen zu diesen Zwecken Polyurethan- oder Epoxy-Klebstoffe zur Anwendung.

In diesem Zusammenhang offenbaren US-B-6,221,978 und WO 03/060033 feuchtigkeitshärtende Schmelzklebstoffe auf der Basis von Polyurethan für Substrate mit einer geringen Oberflächenenergie, wie zum Beispiel ABS-Polymere.

WO 2009/010324 offenbart Klebstoffe, insbesondere einen Schmelzklebstoff, welche Polyester auf der Basis von Dicarbonsäuren mit ungerader Kohlenstoffanzahl und Poyolen mit ungerader Kohlenstoffanzahl enthalten. Besagte Schmelzklebstoffe sollen eine verbesserte Haftung auf schwierig zu verklebenden Substratoberflächen gewährleisten.

In jüngerer Vergangenheit sind aufgrund ihrer bevorzugten Eigenschaften Silan-modifizierte Polymere in den Fokus des Interesses gelangt. Besagte Verbindungen stellen in der Regel feuchtigkeitsreaktive Präpolymere dar und kommen insbesondere in feuchtigkeitshärtenden Dicht- oder Klebstoffen zur Anwendung.

Eine Zusammenfassung gängiger Verfahren zur Herstellung Silan-modifizierter Polymere wird etwa von M. Pröbster, in "Silane-Modified Polyether Sealants and Elastic Adhesives, Adhesives & Sealants 9/2009, Seiten 18 ff. beschrieben. Eine weitere allgemeine Beschreibung von Verfahren zur Einführung einer reaktiven Siliziumgruppe liefert EP-A-2 080 777.

Die Aufgabe der vorliegenden Erfindung liegt darin, eine Zusammensetzung für einen Klebstoff bereitzustellen, der es erlaubt, schwierig zu verklebende Materialien effektiv und zuverlässig miteinander zu verbinden, wobei der Einsatz giftiger bzw. umweltgefährdender Rohstoffe vermindert bzw. ganz unterbunden werden kann. Gemäss einem weiteren Aspekt ermöglicht die vorliegende Erfindung, die Eigenschaften der Zusammensetzung, wie Härtungsgeschwindigkeit, rheologische Eigenschaften, Haftungseigenschaften usw., für den jeweiligen Verwendungszweck einzustellen.

Erfindungsgemäss wird die Aufgabe durch eine zwei- oder mehrkomponentige Zusammensetzung gemäss dem Anspruch 1 gelöst. Bevorzugte Ausführungsformen sind in den abhängigen Ansprüchen wiedergegeben.

Gemäss Anspruch 1 betrifft die Erfindung eine zwei- oder mehrkomponentige Zusammensetzung umfassend
a) eine erste Komponente A enthaltend mindestens ein Silan-modifiziertes Präpolymer und
b) eine zweite Komponente B enthaltend Wasser.

Die Zusammensetzung ist dadurch gekennzeichnet, dass sie zusätzlich ein zyklisches Carbonat umfasst.

Die erfindungsgemässe Zusammensetzung besitzt die Eigenschaft, Substrate, welche mindestens teilweise aus schwierig zu verklebenden Materialien bestehen, effektiv zu verkleben. Insbesondere wurde festgestellt, dass die Haftung auf Materialien umfassend ABS stark verbessert ist.

Die erfindungsgemässe Zusammensetzung erlaubt es, Verklebungen von Substraten aus schwierig zu verklebenden Materialien, insbesondere ABS, durchzuführen, die zu 100% in einem kohäsiven Bruchbild resultieren. Insbesondere wird dies ohne spezielle Vorbehandlung der Substratoberflächen und ohne den Einsatz von Primern, Vorstrichen, Grundierungen, Haftvermittlern, Haftverbesserern, Haftgrund oder Voranstrichen erreicht. Analoge Zusammensetzungen ohne zyklisches Carbonat liefern ein zu 100% adhäsives Bruchbild.

Weiter erlaubt es die erfindungsgemässe Zusammensetzung auf Polymere zurückzugreifen, die bzw. deren Rohstoffe umweltverträglicher sind als die aus dem Stand der Technik bekannten. Insbesondere können Polymere auf der Basis von Isocyanaten oder Epoxiden vermieden werden.

Mit dem Ausdruck ,zwei- oder mehrkomponentige Zusammensetzung' wird im Zusammenhang der vorliegenden Erfindung sowohl die Gesamtheit der einzelnen, getrennt voneinander vorliegenden Komponenten, als auch die nach Durchmischung einzelner Komponenten resultierende Mischungen verstanden.

Aufgrund des Vorliegens einer zwei- oder mehrkomponentigen Zusammensetzung wird im Gegensatz zu Einkomponentensystemen eine rasche Härtung ermöglicht, da sie nicht von der Diffusion der Feuchtigkeit aus der Luft abhängig ist. Insbesondere bei der Verwendung der erfindungsgemässen Zusammensetzung in einem Kleb-, Dichtoder Beschichtungsstoff kann eine rasche Härtung vorteilhaft sein. Besonders für grossflächige Verklebungen ist ein zwei- oder mehrkomponentiger Klebstoff erwünscht.

Gemäss einer ersten Ausführungsform der erfindungsgemässen Zusammensetzung ist es denkbar, dass nur die Komponente A besagtes Silan-modifizierte Präpolymer enthält. Entsprechend wird das Mischverhältnis der beiden Komponenten vor Anwendung der Zusammensetzung, z. B. als Klebstoff, so gewählt, dass die Komponente B in viel geringeren Mengen als die Komponente A beigemischt wird. Mischverhältnisse von 10:1 bis 50:1 sind in diesem Falle daher die Regel.

Die Komponente A weist das Silan-modifizierte Präpolymer bevorzugt zu mindestens 5 Gew.-% und höchstens zu 60 Gew.-% auf.

Alternativ kann auch die Komponente B ein Silan-modifiziertes Präpolymer umfassen. Mit der Menge des in der Komponente B enthaltenen Wassers kann das Mischungsverhältnis eingestellt werden. Für einige Anwendungen ist dabei ein Mischverhältnis von 1:1 bevorzugt. Unabhängig vom Mischverhältnis haben kleine Abweichungen von diesem nur einen kleinen Einfluss auf die Härtung und deren Geschwindigkeit. Die Menge des Silan-modifizierten Präpolymers in der Komponente B beträgt vorzugsweise nicht mehr als 60 Gew.-%.

Die im Zusammenhang mit der vorliegenden Erfindung gemachten Ausführungen bezüglich des Silan-modifizierten Präpolymers können generell - sofern nicht spezifisch vermerkt - sowohl für das in der Komponente A sowie für das in der Komponente B enthaltene Silan-modifizierten Präpolymer zutreffen.

Die erfindungsgemässe Zusammensetzung kann weitere Stoffe, wie Weichmacher, Haftvermittler, Katalysatoren, chemische Trocknungsmittel und/oder weitere Hilfsstoffe, wie UV-Stabilisatoren, Antioxidantien, Rheologiehilfsmittel, Tackifier umfassen.

Die Zusammensetzung enthält vorzugsweise das zyklische Carbonat zu mindestens 0.5 Gew.-% und zu höchstens 20 Gew.-%.

Je nach Wahl des zyklischen Carbonat bzw. der spezifischen, weiteren in der Zusammensetzung enthaltenen Stoffe, insbesondere der eingesetzten Haftvermittler, ist es denkbar, dass das zyklische Carbonat mit besagten Stoffen reagieren könnte und dass hierdurch die Lagerstabilität nicht mehr gewährleistet wäre. Um diese unerwünschte Reaktion vor der Mischung der Komponenten zu verhindern, liegen das zyklische Carbonat und besagte Stoffe, insbesondere die Haftvermittler, bevorzugt in unterschiedlichen Komponente vor und sind folglich während der Lagerung räumlich voneinander getrennt. Somit wird eine ausreichende Lagerstabilität der Zusammensetzung erzielt. Das zyklische Carbonat liegt dabei bevorzugt in der Komponente B und die Haftvermittler in einer anderen, insbesondere der Komponente A, vor.

Der Anteil der Haftvermittler in der Zusammensetzung bzw. in Komponente A umfasst vorzugsweise nicht mehr als 10 Gew.-%.

Die chemischen Trocknungsmittel sowie die Katalysatoren liegen - falls vorhanden - bevorzugt in der Komponente A vor. In diesem Falle weist die Komponente A chemische Trocknungsmittel vorzugsweise zu höchstens 5 Gew.-% und/oder Katalysatoren zu höchstens 2% auf.

Der Wasseranteil der Komponente B liegt bevorzugt bei mindestens 0.1 Gew.-% und bei höchstens 10% Gew.-%.

Die Komponente B kann insbesondere Weichmacher und/oder Füllstoffe umfassen, wobei vorzugsweise der Anteil an Weichmachern höchstens 60% Gew-% bzw. der Anteil an Füllstoffen höchstens 90 Gew.-% beträgt.

In einer bevorzugten Ausführungsform ist das Silan-modifizierte Präpolymer ein Diethoxysilan- oder ein Triethoxysilan-modifiziertes Präpolymer. Insbesondere ist das Silan-modifizierte Präpolymer bevorzugt ein Diethoxysilan- oder ein Triethoxysilan-terminiertes Präpolymer.

In einer besonders bevorzugten Ausführungsform umfasst das Silan-modifizierte Präpolymer sowohl ein Dimethoxysilansowie ein Trimethoxysilan-terminiertes Präpolymer.

Durch das Verhältnis von Dimethoxy- beziehungsweise Trimethoxysilan-terminiertem Präpolymer wird die Geschwindigkeit der Härtung beeinflusst. Je höher der Anteil an Trimethoxysilan-terminiertem Präpolymer, umso höher ist die Geschwindigkeit der Härtung. Die erfindungsgemässe Zusammensetzung ermöglicht es daher, die Geschwindigkeit der Härtung und somit die Topfzeit eines auf der Zusammensetzung basierenden Klebstoffs anwendungsspezifisch einzustellen.

Weiter ist bevorzugt, dass das Silan-modifizierte Präpolymer, insbesondere das Dimethoxysilan- und/oder Trimethoxysilan-terminierte Präpolymer, sowohl in der Komponente A als auch in der Komponente B enthalten ist. Das Silan-modifizierte Präpolymer umfasst bevorzugt ein organisches Polymer und/oder ein Polysulfid, wobei das organische Polymer bevorzugt ausgewählt ist aus der Gruppe bestehend aus einem Polyether, Polyacrylat, Polyisobuten, Polyurethan, Polyacrylnitril-Butadien, Polycarbonat, Polyester, Polystyrol, Polyolefin und Mischungen davon.

Die Eigenschaften polymerer Zusammensetzungen bzw. entsprechender Kleb-, Dicht- und Beschichtungsstoffe sowohl in ihrer pastösen als auch in ihrer ausgehärteten Form werden massgeblich über die Art der Polymerkette des darin enthaltenen silan-modifizierten Polymers beeinflusst. Aufgrund der Kompatibilität des erfindungsgemäss eingesetzten zyklischen Carbonats mit Polysulfid und vielen organischen Polymeren erlaubt es die vorliegende Erfindung, die Eigenschaften der Zusammensetzung, wie z.B. die Durchhärtungsgeschwindigkeit, thermische Eigenschaften, rheologische Eigenschaften, praktisch beliebig je nach Anwendungsbereich einzustellen. Durch die Wahl des dem Silan-modifizierten Präpolymer zugrundeliegenden Polymers können die Eigenschaften der erfindungsgemässen Zusammensetzung den Anforderungen der jeweiligen Anwendung entsprechend angepasst werden. Dies ist insbesondere dann vorteilhaft, wenn die erfindungsgemässe Zusammensetzung eine Basis für z.B. einen Kleb-, Dicht- oder Beschichtungsstoff darstellt.

Besonders bevorzugt ist das silan-modifizierte Präpolymer ausgewählt aus der Gruppe von silan-modifizierten Acrylnitril-Butadien-Polymeren der Firma merz + benteli ag, Desmoseal^{®} der Firma Bayer Materials Science (insbesondere Desmoseal^{®} S XP 2458, Desmoseal^{®} XP 2749 und Desmoseal^{®} S XP 2636), Geniosil^{®} der Firma Wacker Chemie AG (insbesondere Geniosil^{®} STP-E10, Geniosil^{®} STP-E15, Geniosil^{®} STP-E30 und Geniosil^{®} STP-E35), silanterminierten Polyurethanen von Hanse Chemie AG bzw. Evonik Industries (insbesondere SP XP 48, ST61, ST75 und ST77) und Silquest^{®} von Momentive Performance Materials Inc. (insbesondere SPUR+1015LM, SPUR+1050MM, SPUR+1010LM, SPUR+3100HM, SPUR+3200HM), MS-Polymeren von Kaneka Corporation (insbesondere MS-203, MS-303, SAX260, SAX350, SAX400, SAX220, S154, S327, S227, SAX725, SAX510, SAX520, SAX530, SAX580, SAT010, SAX015, SAX770, SAX220, SAX115, (Polyether Backbone)), MAX-Polymeren von Kaneka Corporation (insbesondere MAX602, MAX923, MAX951, MA451, MA850 (Polyether/Polyacrylat Backbone)), XMAP Polymere von Kaneka Corporation (insbesondere SA100S-N-DR, SA110S-N-DR, OR100S (Polyarylate Backbone)), Epion von Kaneka Corporation (insbesondere EP100S und EP303S (Polyisobutylen-Backbone)) und insbesondere Triethoxysilan-modifizierten Präpolymeren von Evonik Industries, wie z.B. beschrieben in EP-A-2 289 976.

Das zyklische Carbonat der erfindungsgemässen Zusammensetzung ist vorzugsweise Ethylencarbonat oder ein Derivat davon.

Besonders bevorzugt entspricht das zyklische Carbonat einer Verbindung gemäss Formel (Ia) bzw. (Ib).

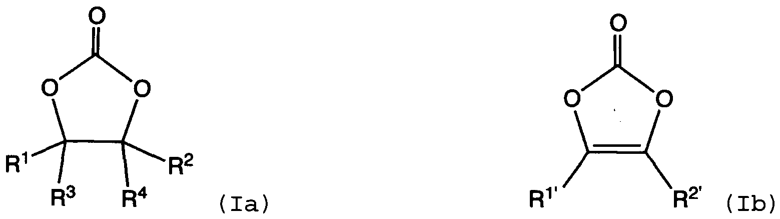

R¹, R², R³, R⁴, R^{1'} und R^{2'} sind dabei unabhängig voneinander ausgewählt aus der Gruppe bestehend aus aliphatischen, aromatischen, vinylischen, zyklischen, linearen und verzweigten Alkylresten, sowie H und substituierten Heteroatomen. Bei den substituierten Heteroatomen handelt es sich dabei bevorzugt um alkyl-, aryl- oder vinylsubstituierte Heteroatome, wobei die Heteroatome insbesondere ausgewählt sind aus der Gruppe bestehend aus Sauerstoff, Stickstoff und Schwefel. Die Reste R³ und R⁴, bzw. R^{1'} und R^{2'} bilden gegebenenfalls einen Ring, insbesondere einen Cyclohexan- bzw. einen Cyclohexen-Ring.

Besonders bevorzugt umfasst die erfindungsgemässe Zusammensetzung Propylencarbonat, insbesondere 1,2- oder 1,3-Propylencarbonat, als zyklisches Carbonat, wobei sie bevorzugt einen Propylencarbonat-Gehalt von mindestens 0.5 Gew.-% und von höchstens 20 Gew.-% aufweist. Besonders bevorzugt liegt Propylencarbonat zu mindestens 1 Gew.-% und zu höchstens 10 Gew.-% vor.

In einer weiteren bevorzugten Ausführungsform umfasst die erfindungsgemässe Zusammensetzung zusätzlich ein Epoxysilan. Durch den Einsatz eines Epoxysilans wird ein zusätzlich erhöhter Effekt hinsichtlich der Verbesserung der Haftung erzielt. Das Epoxysilan liegt vorzugsweise in der Komponente B vor. Diesbezüglich wird vermutet, dass besagter erhöhte Effekt damit begründet werden kann, dass das Epoxysilan durch das in der Komponente B vorliegende Wasser bis zu einem gewissen Grad hydrolysiert wird und dass so eine Vorvernetzung vor der Durchmischung mit der Komponente A und vor der eigentlichen Anwendung stattfindet.

Unter Epoxysilan wird im Zusammenhang mit der vorliegenden Erfindung eine organische Silan-Verbindung verstanden, welche ein Epoxid als zusätzliche funktionelle Gruppe aufweist.

Die Silylgruppe des Epoxysilans weist bevorzugt die Struktur gemäss Formel (II) auf:

(R⁵)ₐ(R⁶)₃₋ₐSi- (II)

wobei R⁵ ein wahlweise substituierter und/oder ein Heteroatom umfassender Kohlenwasserstoffrest,
R⁶ ein Alkoxy-, Acetoxy-, Oxim- oder Aminrest, und
a 0, 1, 2 oder 3 ist.

Im Allgemeinen ist R⁵ ein Kohlenwasserstoffrest mit 1 bis 20 Kohlenstoffatomen. Vorzugsweise ist R⁵ ein Methyl- oder Ethylrest. Als R⁵ ist aber auch z.B. ein Aromat, ein Ester, ein Thioester oder ein Thioether denkbar.

Vorzugsweise umfasst das Epoxysilan ein Epoxy-funktionelles Alkoxysilan. Dementsprechend ist R⁶ vorzugsweise ein Alkoxyrest, besonders bevorzugt ein Methoxy- oder Ethoxyrest.

Insbesondere ist bevorzugt, dass die Silylgruppe eine Dimethoxymethylsilyl-, eine Dimethoxyethylsilyl-, eine Trimethoxysilylgruppe, eine Diethoxymethylsilyl-, eine Diethoxyethylsilyl- und/oder eine Triethoxysilylgruppe ist. Unter diesen ist eine Diethoxyethylsilyl-, eine Diethoxymethylsilyl- und eine Triethoxysilylgruppe besonders bevorzugt, da bei der Aushärtung bzw. Vernetzung der Zusammensetzung Ethanol abgespalten wird, was hinsichtlich des toxischen Profils gegenüber einer Abspaltung von z.B. Methanol bevorzugt ist.

Besonders bevorzugt weist das Epoxy-funktionelle Alkoxysilan die Strukturformel (III) auf: 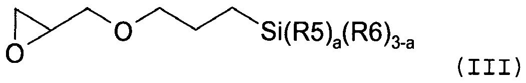 wobei R⁵, R⁶ und a die oben angegebene Bedeutung haben.

Geeignet sind insbesondere (3-Glycidyloxypropyl)-dimethoxymethylsilan, (3-Glycidyloxypropyl)-trimethoxysilan, (3-Glycidyloxypropyl)diethoxymethylsilan, (3-Glycidyloxypropyl)triethoxysilan oder (3-Glycidyloxypropyl)diethoxyethylsilan.

Weitere eine Epoxidgruppe aufweisende Silanverbindungen, die für die Zwecke der vorliegenden Erfindung denkbar sind, werden in WO2008/031895 (Seite 7, Verbindungen Nr. 41 bis 47) aufgeführt, deren Inhalt hiermit durch Bezugnahme miteingeschlossen wird. Weiter sei diesbezüglich auch [2-(3,4-Epoxycyclohexyl)ethyl]-trimethoxysilan erwähnt. Als Epoxysilan kann auch ein oligomeres Epoxysilan verwendet werden, z.B. CoatOsil MP 200 von Momentive Performance Materials.

Vorzugsweise umfasst die Komponente B das Epoxysilan zu höchstens 2%.

Weiter weist die Komponente B bevorzugt eine anorganische oder organische Säure, insbesondere Essigsäure, auf. Die Zugabe der Säure erlaubt es, den pH-Wert der Komponente B derart einzustellen, dass die Komponente B lagerstabil ist. Insbesondere werden bei geeignet eingestelltem pH-Wert unerwünschte Reaktionen vor der Anwendung der Zusammensetzung und vor der Mischung der mindestens zwei Komponenten unterdrückt bzw. vermieden. Ein Zerfallen des zyklischen Carbonats zu Kohlendioxid und dem entsprechenden Diol, wie es etwa in der Gegenwart des in der Komponente B enthaltenen Wassers und bei einem zu hohen pH-Wert denkbar wäre, wird somit wirksam vermieden.

Der optimale pH-Bereich kann je nach verwendetem zyklischem Carbonat bzw. Silan-modifizierten Präpolymeren unterschiedlich sein. Häufig liegt der optimale pH-Wert zwischen 5 und 7. In diesem pH-Bereich kann zudem die vorzeitige Aushärtung der Komponente B unterdrückt werden, da es bei einem zu tiefen pH-Wert vorkommen kann, dass die Silylgruppen der in der Komponente B enthaltenen Silan-modifizierten Präpolymere hydrolysiert werden. Die Gefahr ist insbesondere gegeben, wenn die Komponente B Trimethoxysilan-modifizierte Präpolymere umfasst. Daher ist es unter Umstände zweckmässig, den pH-Wert in einem engen Bereich zu halten, in dem weder der Zerfall des Carbonats noch die Aushärtung des Silan-modifizierten Präpolymers begünstigt wird. Die exakte Einstellung des pH-Wertes kann insbesondere mit der Zugabe von verdünnter Essigsäure zur Komponente B erzielt werden.

In einem weiteren Aspekt betrifft die vorliegende Erfindung einen Kleb-, Dicht- oder Beschichtungsstoff basierend auf der erfindungsgemässen Zusammensetzung, sowie die Verwendung der erfindungsgemässen Zusammensetzung als Kleb-, Dicht- oder Beschichtungsstoff.

In diesem Zusammenhang sei auf EP-A-09 016 157 verwiesen, welche sich auf eine Art modulares "Baukasten-System" bezieht, das es erlaubt, je nach gewünschten Eigenschaften eine bevorzugte Polymerkette mit einer bevorzugten Silanverbindung miteinander zu kombinieren. Dadurch wird es möglich, die Eigenschaften Silan-modifizierter Polymere in nahezu beliebiger Weise einzustellen.

Durch die Lehre der vorliegenden Erfindung kann nun die Offenbarung von EP-A-09 016 157 auf einen Kleb-, Dichtoder Beschichtungsstoff angewendet werden, welcher eine besonders gute Haftung auf schwierig zu verklebende Materialien, insbesondere ABS, zeigt.

Im Besonderen können bei Verwendung der erfindungsgemässen Zusammensetzung in einem Kleb-, Dicht- oder Beschichtungsstoff durch die Wahl der Polymerkette einerseits die Eigenschaften pastöser Zusammensetzungen, insbesondere der unvermischten einzelnen Komponenten, beeinflusst werden. Hier spielen Eigenschaften, wie z.B. das toxische Profil, die Viskosität, Rheologie, Verarbeitbarkeit, Standfestigkeit usw., eine wichtige Rolle. Andererseits können durch die Wahl der Polymerkette die Eigenschaften der durchmischten und ausgehärteten Zusammensetzung beeinflusst werden. So können insbesondere hinsichtlich der Beständigkeit, also z.B. der Hitzebeständigkeit, der Brandbeständigkeit, der Tieftemperaturflexibilität, der Tieftemperaturverarbeitbarkeit, der UV-Stabilität, der Wetterstabilität, der Chemikalienbeständigkeit, der Fäkalienbeständigkeit, der Öl- und Kraftstoffbeständigkeit, der Wasserbeständigkeit und der Abriebfestigkeit, aber auch hinsichtlich der mechanischen Eigenschaften, also z.B. der Zugfestigkeit, der Härte, der Elastizität und der Klebrigkeit, die gewünschten Eigenschaften eingestellt werden. Ähnliches gilt hinsichtlich der Durchlässigkeit, d.h. der Wasser-, Dampfund Gasdurchlässigkeit, und hinsichtlich des toxischen Profils, also z.B. der Lebensmittelverträglichkeit, der Trinkwasserverträglichkeit und der biologischen Abbaubarkeit, des ausgehärteten Kleb-, Dicht- oder Beschichtungsstoff.

Insbesondere bei der Verwendung der erfindungsgemässen Zusammensetzung als Klebstoff können die Haftungseigenschaften, also z.B. die Kunststoffhaftung, die Nasshaftung, die Haftung auf porösen und alkalischen oder sauren Oberflächen und die Haftung auf nassen Untergründen, durch entsprechende Wahl der Polymerkette in geeigneter Weise auf den jeweiligen Anwendungszweck hin eingestellt werden. Zudem bestimmt die Polymerkette massgeblich die physikalischen Eigenschaften der ausgehärteten Masse, wie z.B. den Brechungsindex und die elektrische, thermische und akustische Leitfähigkeit bzw. Isolation.

Die in den beiden vorangegangenen Abschnitten beschriebene Flexibilität kann nun durch die vorliegende Erfindung auf schwierig zu verklebende Materialien angewendet werden.

Ein weiterer Aspekt der vorliegenden Verbindung betrifft ein Verfahren zum Verkleben von Gegenständen mittels der erfindungsgemässen Zusammensetzung. Das Verfahren umfasst i) Mischen der Komponente A mit der Komponente B und allfällig weiteren Komponenten, ii) Auftragung der Mischung aus i) auf mindestens einen der zu verklebenden Gegenstände und iii) Zusammenfügen der zu verklebenden Gegenstände.

Vorzugsweise wird das Verfahren auf Gegenstände angewendet, welche Materialien mit geringer Oberflächenenergie und/oder Materialien, die schwierig zu verkleben sind, insbesondere Acrylnitril-Butadien-Styrol (ABS), Acrylnitril-Styrol-Acrylat (ASA), Polyethylen, Polypropylen, Aluminium, Stahl oder Faser-verstärkte Kunststoffe, umfassen, da dabei die Vorteile der vorliegenden Erfindung besonders stark zum Tragen kommen. Besonders bevorzugt wird das Verfahren für Gegenstände aus ABS oder dem UV-beständigeren ASA angewendet.

### Beispiele

### Ausführungsbeispiel für Komponente A (A):

26% Trimethoxysilan-terminiertes Polyacrylat/Polyoxypropylen (Kaneka)
18% Dimethoxymethylsilan-terminiertes Polyoxypropylen (Kaneka)
8% Weichmacher (z.B. DIUP)
43% Füllstoff (z.B. Omyacarb 1T-AV)
1.2% Vinyltrimethoxysilan
1.5% (3-(2-Aminoethyl)aminopropyl)trimethoxy-silan
1.5% 3-Aminopropyltriethoxysilan
1% 3-Aminopropyltrimethoxysilan
0.45% Katalysator (z.B. Metatin 740)

### Ausführungsbeispiel 1 für Komponente B (B1):

17.5% **Trimethoxy**silan-terminiertes Polyoxypropylen (Kaneka)
6% Dimethoxymethylsilan-terminiertes Polyoxypropylen (Kaneka)
16% Weichmacher (z.B. DIUP)
54% Füllstoff (z.B. Omyacarb 1T-AV)
6% Propylencarbonat
0.5% 3-Glycidoxypropyltrimethoxysilan
0.7% 8%-ige Essigsäure in Wasser

### Ausführungsbeispiel 2 für Komponente B (B2):

17.5% **Dimethoxymethyl**silan-terminiertes Polyoxypropylen (Kaneka)
6% Dimethoxymethylsilan-terminiertes Polyoxypropylen (Kaneka)
16% Weichmacher (z.B. DIUP)
54% Füllstoff (z.B. Omyacarb 1T-AV)
6% Propylencarbonat
0.5% 3-Glycidoxypropyltrimethoxysilan
0.7% 8%-ige Essigsäure in Wasser

### Ausführungsbeispiel 3 für Komponente B (B3):

17.5% **Dimethoxymethyl**silan-terminiertes Polyoxypropylen (Kaneka)
6% Dimethoxymethylsilan-terminiertes Polyoxypropylen (Kaneka)
16% Weichmacher (z.B. DIUP)
54% Füllstoff (z.B. Omyacarb 1T-AV)
0.7% 8%-ige Essigsäure in Wasser

Mit den oben angegebenen Komponenten wurden drei verschiedene Klebstoffe hergestellt. Hierfür wurde die Komponente A mit der Komponente B1, B2 bzw. B3 jeweils im Verhältnis 1:1 vermischt.

Die ungefähre Topfzeit der erhaltenen Klebstoffmischungen wurde ermittelt und ist in Tabelle 1 wiedergegeben. Ein Vergleich der Topfzeiten der beiden Klebstoffmischungen A+B1 und A+B2 zeigen, dass durch die Wahl der Anzahl Methoxygruppen des Methoxysilan-terminierten Polyoxypropylens die Topfzeit variiert werden kann. Durch den Ersatz des Trimethoxysilan-terminierten Polyoxypropylen (A+B1) mit dem weniger reaktiven Dimethoxymethylsilan-terminierten Polyoxypropylen (A+B2) kann die Topfzeit von 5 bis 7 min auf 20 bis 30 min verlängert werden. Je nach Einsatzgebiet ist eine kürzere oder längere Topfzeit erwünscht. Ein Klebstoff basierend auf der erfindungsgemässen Zusammensetzung erlaubt es nun, die Topfzeit für einen Klebstoff für schwierig zu verklebende Materialien den Bedürfnissen entsprechend einzustellen.

Dabei ist anzumerken, dass im angeführten Beispiel nur ein Teil des in der Komponente B enthaltenen Silanterminierten Polyoxypropylen geändert wurde; in beiden Fällen wurde dieselbe Komponente A verwendet.

Die oben erwähnten Klebstoffmischungen wurden verwendet, um zwei Substrate aus ABS miteinander zu verkleben. Das Bruchbild der Verklebung nach einer Abschäl- und/oder Zugscherprüfung zeigt bei Verwendung erfindungsgemässer Klebstoffe (A+B1 und A+B2) ein zu 100% kohäsiver Bruch. Bei der Verwendung der Vergleichszusammensetzung (A+B3) wird hingegen ein zu 100% adhäsiver Bruch erhalten.

| 1:1 Mischungen | **A + B1** | **A + B2** | **A + B3** |
|---|---|---|---|
| **Topfzeit** | 5-7 min | 20-30 min | 20-30 min |
| **Bruchbild** ABS-ABS Verklebung (Zugscherprüfung nach DIN EN 1465:1995-01), Schichtdicke 1 mm, 7d 23°C/50% rel. Luftfeuchtigkeit | 100% kohäsiv | 100% kohäsiv | 100% adhäsiv |

## Patentansprüche

1. Zwei- oder mehrkomponentige Zusammensetzung umfassend
a) eine erste Komponente A enthaltend mindestens ein Silan-modifiziertes Präpolymer und
b) eine zweite Komponente B enthaltend Wasser,
**dadurch gekennzeichnet, dass** die Zusammensetzung zusätzlich ein zyklisches Carbonat umfasst.

2. Zusammensetzung gemäss Anspruch 1, wobei das zyklische Carbonat in der Komponente B enthalten ist.

3. Zusammensetzung gemäss Anspruch 1 oder 2, wobei das Silan-modifizierte Präpolymer ein Dimethoxysilan-,ein Trimethoxysilan-, oder ein Triethoxysilan-modifiziertes, bevorzugt ein Dimethoxysilan-, ein Trimethoxysilan, oder ein Triethoxysilan-terminiertes Präpolymer ist.

4. Zusammensetzung gemäss einem der vorangehenden Ansprüche, wobei die Komponente B zusätzlich ein Silan-modifiziertes Präpolymer, bevorzugt ein Dimethoxysilan-, ein Trimethoxysilan oder ein Triethoxysilan-terminiertes Präpolymer, umfasst.

5. Zusammensetzung gemäss einem der vorangehenden Ansprüche, wobei das Silan-modifizierte Präpolymer ein organisches Polymer und/oder ein Polysulfid umfasst.

6. Zusammensetzung gemäss Anspruch 5, wobei das organische Polymer ausgewählt ist aus der Gruppe bestehend aus einem Polyether, Polyacrylat, Polyisobuten, Polyurethan, Polyacrylnitril-Butadien, Polycarbonat, Polyester, Polystyrol, Polyolefin und Mischungen davon.

7. Zusammensetzung gemäss einem der vorangehenden Ansprüche, wobei das zyklische Carbonat Ethylencarbonat oder ein Derivat davon ist.

8. Zusammensetzung gemäss Anspruch 7, wobei das zyklische Carbonat einer Verbindung gemäss Formel (Ia) bzw. (Ib) 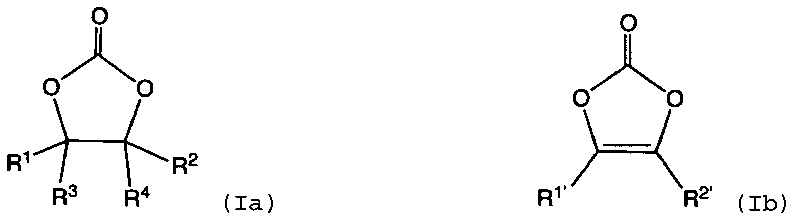 entspricht, wobei R¹, R², R³, R⁴, R^{1'} und R^{2'} unabhängig voneinander ausgewählt sind aus der Gruppe bestehend aus aliphatischen, aromatischen, vinylischen, zyklischen, linearen und verzweigten Alkylresten, sowie H und substituierten Heteroatomen und wobei gegebenenfalls R³ und R⁴ bzw. R^{1'} und R^{2'} einen Ring bilden können.

9. Zusammensetzung gemäss einem der vorangehenden Ansprüche, wobei das zyklische Carbonat Propylencarbonat, insbesondere 1,2- oder 1,3-Propylencarbonat ist.

10. Zusammensetzung gemäss einem der vorangehenden Ansprüche, wobei sie zusätzlich ein Epoxysilan umfasst.

11. Zusammensetzung gemäss Anspruch 10, wobei das Epoxysilan in der Komponente B enthalten ist.

12. Zusammensetzung gemäss Anspruch 10 oder 11, wobei das Epoxysilan ein Epoxy-funktionelles Alkoxysilan, insbesondere 3-Glycidoxypropyltrimethoxysilan, 3-Glycidoxypropylmethyldimethoxysilan, 3-Glycidoxypropyltriethoxysilan, 3-Glycidoxypropylmethyldiethoxysilan, 3-Glycidoxypropylethyldiethoxysilan, oder ein Oligomeres davon umfasst.

13. Zusammensetzung gemäss einem der vorangehenden Ansprüche, wobei die Komponente B einen pH-Wert von 5 bis 7 aufweist.

14. Verwendung der Zusammensetzung gemäss einem der vorangehenden Ansprüche als Kleb-, Dicht- oder Beschichtungsstoff, insbesondere als Klebstoff zur Verklebung von Substraten umfassend Acrylnitril-Butadien-Styrol.

15. Verfahren zum Verkleben von Gegenständen umfassend i) Mischen der Komponente A mit der Komponente B und allfällig weiteren Komponenten, ii) Auftragung der Mischung aus i) auf mindestens einen der zu verklebenden Gegenstände und iii) Zusammenfügen der zu verklebenden Gegenstände.

16. Verfahren gemäss Anspruch 15, wobei mindestens einer der Gegenstände ein Material mit geringer Oberflächenenergie, insbesondere ein Material enthaltend Acrylnitril-Butadien-Styrol, umfasst.
